# EUROPÄISCHE PATENTSCHRIFT

(11) **EP 1 795 016 B1**
(45) Veröffentlichungstag und Bekanntmachung des Hinweises auf die Patenterteilung: **11.08.2010**
(21) Anmeldenummer: 05782600.0
(22) Anmeldetag: 07.09.2005
(51) Int. Cl.: H04Q 3/00

(54) **VERMARKTUNGSVERFAHREN UND KOMMUNIKATIONSSYSTEM ZUR DURCHFÜHRUNG DES VERMARKTUNGSVERFAHRENS**
MARKETING METHOD AND COMMUNICATIONS SYSTEM FOR CARRYING OUT THE MARKETING METHOD
PROCEDE DE COMMERCIALISATION ET SYSTEME DE COMMUNICATION POUR LA MISE EN OEUVRE DUDIT PROCEDE

(30) Priorität: 28.09.2004 DE 102004047020
(43) Veröffentlichungstag der Anmeldung: 13.06.2007
(73) Patentinhaber: SIEMENS AKTIENGESELLSCHAFT, 80333 München (DE)
(72) Erfinder: BLANK, Felix, 81241 München (DE)
(74) Vertreter: Fritzsche, Thomas
(86) Internationale Anmeldenummer: PCT/EP2005/054406
(87) Internationale Veröffentlichungsnummer: WO 2006/034944

(56) Entgegenhaltungen:
- WO-A-2004/042608
- US-A- 6 055 513

## Beschreibung

Bei zeitgemäßen Vermarktungsmethoden gewinnt ein gezieltes kundenspezifisches Bewerben und Anbieten von Waren oder Dienstleistungen zunehmend an Bedeutung. Bei vielen solchen Vermarktungsmethoden wird zunächst ein Kundenverhalten analysiert und ausgewertet, um abhängig davon gezielte kundenspezifische Vermarktungsaktionen durchzuführen.

Ein gegenwärtig viel diskutiertes Verfahren zur Erstellung von Kundenprofilen basiert auf so genannten RFID-Etiketten (RFID: Radio Frequency Identification), die jeweils eine berührungslos auslesbare, weltweit eindeutige Kennung tragen. RFID-Etiketten sind klein genug, um auf einer Vielzahl von Produkten angebracht werden zu können, um diese jeweils eindeutig zu kennzeichnen. Zur Erstellung eines individuellen Kundenprofils werden von einem Kunden gekaufte Waren anhand ihrer RFID-Kennung identifiziert und dem z.B. biometisch erkannten Kunden zugeordnet gespeichert. Eine Auswertung dieser kundenspezifisch gespeicherten Daten über das Kundenverhalten kann später zur gezielten, am Kundenbedarf orientierten Werbung oder zu anderen kundenspezifischen Vermarktungsaktionen genutzt werden.

Zur Durchführung eines solchen Verfahrens ist es jedoch erforderlich, zunächst eine Vielzahl von Waren mit RFID-Etiketten zu versehen. Darüber hinaus bedingt das Sammeln von Informationen über einen jeweiligen Kunden in der Regel eine gewisse Zeitverzögerung bis eine gezielte Vermarktungsaktion durchgeführt werden kann. Ein kurzfristiger Kundenbedarf kann somit nur in sehr eingeschränkter Weise berücksichtigt werden.

Die US 6055513 A beschreibt Vorrichtungen und Verfahren zur Vornahme von Remote Commerce, wie z.B. im Bereich Telemarketing (eingehend oder ausgehend) und des elektronischen Geschäftsverkehrs, die insbesondere für die intelligente Auswahl und Darbietung von Waren, Dienstleistungen oder Informationen zu einem Benutzer oder Kunden angepasst zur Verfügung gestellt werden.

Es ist Aufgabe der vorliegenden Erfindung ein Vermarktungsverfahren und ein Kommunikationssystem anzugeben, die eine zeitnah am momentanen Kundenbedarf orientierte Vermarktung erlauben.

Gelöst wird diese Aufgabe durch ein Verfahren mit den Merkmalen des Patentanspruchs 1 sowie durch ein Kommunikationssystem gemäß Patentanspruch 9.

Vorteilhafte Ausführungsformen und Weiterbildungen der Erfindung sind in den abhängigen Ansprüchen angegeben.

Erfindungsgemäß ist vorgesehen, dass in einer Datenbank eines Kommunikationssystems über das Kommunikationssystem erreichbare Zielteilnehmer unterschiedlichen Teilnehmerklassen zugeordnet werden, denen jeweils mindestens ein Vermarkter, z.B. eine Werbeagentur oder ein Anbieter von Waren oder Dienstleistungen, zugeordnet wird. Das Kommunikationssystem kann z.B. durch ein öffentliches oder privates Kommunikationsnetz oder durch mehrere gekoppelte Kommunikationsnetze realisiert sein. Wenn das Kommunikationssystem anhand einer von einem ersten Teilnehmer angegebenen Zieladresse, z.B. einer Rufnummer oder Email-Adresse, eine erste Kommunikationsbeziehung zwischen dem ersten Teilnehmer und einem durch die Zieladresse identifizierten Zielteilnehmer aufbaut, wird anhand der Zieladresse eine Teilnehmerklasse ermittelt, der der durch die Zieladresse identifizierte Zielteilnehmer angehört. Die erste Kommunikationsbeziehung kann hierbei z.B. eine Telefon- oder Faxverbindung oder eine Übertragung einer Email, SMS oder einer Nachricht im Rahmen des so genannten Instant Messaging sein. Infolge dieser Ermittlung der Teilnehmerklasse wird eine zweite Kommunikationsbeziehung (z.B. per Telefon, Fax, Email, SMS, Instant Messaging) zwischen dem ersten Teilnehmer und einem der ermittelten Teilnehmerklasse zugeordneten Vermarkter durch das Kommunikationssystem aufgebaut.

Die Erfindung erlaubt ein gezieltes kundenspezifisches Marketing abhängig vom aktuellen Kommunikationsverhalten von Teilnehmern des Kommunikationssystems, die mithin als potentielle Kunden kontaktierbar oder ansprechbar sind. Insbesondere erlaubt die Erfindung eine schnelle Reaktion auf von den Teilnehmern initiierte Kommunikationsvorgänge, so dass auch kurzfristige Kundenbedürfnisse zeitnah, gewissermaßen in Echtzeit berücksichtigt werden können. Aufgrund der schnellen Reaktion besteht auch eine hohe Wahrscheinlichkeit, dass der betreffende Teilnehmer noch in Reichweite des Kommunikationssystems anzutreffen ist.

Sind einer Teilnehmerklasse mehrere Vermarkter zugeordnet, so kann gegebenenfalls eine Auswahl eines oder mehrerer Vermarkter durch den ersten Teilnehmer und/oder abhängig von Eigenschaften der ersten Kommunikationsbeziehung, wie z.B. Zeitdauer, übermittelter Information etc., vorgenommen werden.

Gemäß einer vorteilhaften Weiterbildung der Erfindung können den Teilnehmerklassen und/oder einem jeweiligen Vermarkter in der Datenbank jeweils eine teilnehmerklassen-spezifische und/oder vermarkter-spezifische Vermarktungsaktion zugeordnet werden. Im Rahmen der zweiten Kommunikationsbeziehung kann dann eine der ermittelten Teilnehmerklasse und/oder dem zugeordneten Vermarkter zugeordnete Vermarktungsaktion initiiert werden.

Bei mehreren zugeordneten Vermarktungsaktionen können eine oder mehrere der zugeordneten Vermarktungsaktionen durch den ersten Teilnehmer und/oder abhängig von Eigenschaften, wie z.B. Zeitdauer oder übermittelter Information, der ersten Kommunikationsbeziehung oder eines sonstigen Kommunikationsverhaltens des ersten Teilnehmers ausgewählt werden. Auf diese Weise kann eine Vermarktungsaktion genauer auf die Kundenbedürfnisse abgestimmt werden.

Nach einer vorteilhaften Ausführungsform der Erfindung kann der Aufbau der zweiten Kommunikationsbeziehung durch ein Beenden der ersten Kommunikationsbeziehung, z.B. durch Auflegen des ersten Teilnehmers, veranlasst werden.

Insbesondere kann im Wesentlichen unmittelbar nach Beenden der ersten Kommunikationsbeziehung als zweite Kommunikationsbeziehung eine Verbindung, z.B. eine Telefonverbindung, zwischen dem ersten Teilnehmer und dem der ermittelten Teilnehmerklasse zugeordneten Vermarkter initiiert werden. So kann z.B. unmittelbar nachdem der erste Teilnehmer aufgelegt hat, durch das Kommunikationssystem eine Telefonverbindung zwischen dem ersten Teilnehmer und dem zugeordneten Vermarkter initiiert werden, so dass sowohl beim ersten Teilnehmer als auch beim zugeordneten Vermarkter jeweils ein Telefonanruf signalisiert wird. Nach Annahme des Rufes auf beiden Seiten wird die Telefonverbindung durchgeschaltet.

Gemäß einer vorteilhaften Weiterbildung der Erfindung kann durch das Kommunikationssystem eine den ersten Teilnehmer identifizierende Adressinformation, z.B. dessen Telefonnummer oder Email-Adresse erfasst werden. Die erfasste Adressinformation wird anschließend mit Adresseinträgen in einer Adressenliste der Datenbank verglichen und bei positivem Vergleichsergebnis die Initiierung der zweiten Kommunikationsbeziehung verhindert. Die Adressenliste kann z.B. eine so genannte Robinson-Liste sein, in der Teilnehmeradressen von Teilnehmern gespeichert sind, die keine Vermarktung wünschen.

Weiterhin kann vorgesehen sein, dass durch das Kommunikationssystem eine die zweite Kommunikationsbeziehung betreffende Anfrageinformation, z.B. einen zugeordneten Vermarkter und/oder eine zugeordnete Vermarktungsaktion betreffend, an den ersten Teilnehmer übermittelt werden und der Aufbau der zweiten Kommunikationsbeziehung abhängig von einer vom ersten Teilnehmer eingegebenen Antwortinformation erfolgt. Insbesondere kann so z.B. ein Vermarkter und/oder eine Vermarktungsaktion vom ersten Teilnehmer ausgewählt werden. Die Anfrageinformation kann beispielsweise mittels eines so genannten Voice-Prompt, einer Email, SMS oder einer anderen Nachricht übermittelt werden. Die Eingabe der Antwortinformation kann z.B. durch Tastendruck oder Spracheingabe am Endgerät des ersten Teilnehmers erfolgen. Vorzugsweise kann die Anfrageinformation bereits während des Bestehens der ersten Kommunikationsbeziehung zum ersten Teilnehmer übermittelt und dort z.B. auf einem Display eines Telefons oder anderen Endgeräts angezeigt werden. Durch die vorgenannten Möglichkeiten zur Einflussnahme auf den Vermarktungsvorgang lässt sich in der Regel eine höhere Akzeptanz einer solchen Vermarktung bei potentiellen Kunden erzielen.

Nach einer weiteren Ausführungsform der Erfindung kann durch das Kommunikationssystem eine die erste Kommunikationsbeziehung betreffende Anfrageinformation an den der ermittelten Teilnehmerklasse zugeordneten Vermarkter, z.B. per Telefon, Fax, Email, SMS etc. übermittelt werden. Der Aufbau der zweiten Kommunikationsbeziehung kann dann abhängig von einer vom Vermarkter eingegebenen Antwortinformation erfolgen. Auf diese Weise kann der betreffende Vermarkter z.B. die durchzuführende Vermarktungsaktion und/oder ein Kommunikationsmedium für die zweite Kommunikationsbeziehung auswählen. Dies erlaubt dem Vermarkter sehr flexibel auch kurzfristige Vermarktungsbedürfnisse zu berücksichtigen.

Ein Ausführungsbeispiel der Erfindung wird nachfolgend anhand der Zeichnung näher erläutert.

Dabei zeigen jeweils in schematischer Darstellung:
- Figur 1: ein Kommunikationssystem beim Durchführen eines er- findungsgemäßen Vermarktungsverfahren und
- Figur 2: eine Datenbank des Kommunikationssystem.

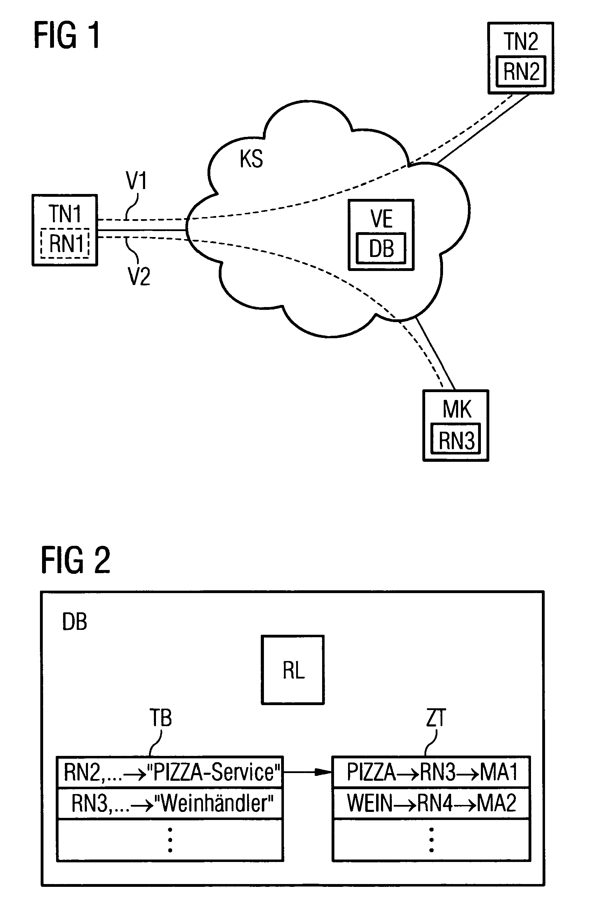

In Figur 1 ist ein Kommunikationssystem KS, z.B. ein öffentliches oder privates Telefonnetz, ein lokales Netz, das Internet oder ein Kommunikationsnetzverbund, zur Durchführung des erfindungsgemäßen Verfahrens schematisch dargestellt. Das Kommunikationssystem KS weist eine Vermittlungseinrichtung VE mit einer Datenbank DB auf. Die Vermittlungseinrichtung VE kann hierbei z.B. ein Telefonnetzvermittler, ein Router, ein vermittlungssteuernder Server oder eine darauf ablaufende Anwendung sein. An das Kommunikationssystem KS sind Teilnehmer TN1, TN2 und MK angekoppelt. Der Teilnehmer TN1 wird gegenüber dem Kommunikationssystem KS durch eine Adresse RN1, der Teilnehmer TN2 durch eine Adresse RN2 und der Teilnehmer MK durch eine Adresse RN3 identifiziert. Die Adressen RN1, RN2 und RN3 können z.B. Telefonrufnummern, Email-Adressen, Internet-Adressen oder andere Adressangaben sein.

Für das vorliegende Ausführungsbeispiel sei angenommen, dass es sich bei den Adressen RN1, RN2 und RN3 um Telefonrufnummern handelt. Zur Veranschaulichung sei weiterhin angenommen, dass der Teilnehmer TN1 als Kunde beim Teilnehmer TN2, einem Pizzaservice, anruft, um eine Pizzabestellung aufzugeben. Durch den Telefonanruf wird eine erste Kommunikationsbeziehung V1 zwischen dem Teilnehmer TN1 und dem Teilnehmer TN2 als Zielteilnehmer aufgebaut. Dieser Verbindungsaufbau wird zusammen mit der zugehörigen Zielrufnummer RN2 von der Vermittlungseinrichtung VE erfasst. Anhand der erfassten Zielrufnummer RN2 erkennt die Vermittlungseinrichtung VE, dass der gerufene Teilnehmer TN2 einer Teilnehmerklasse "Pizzaservice" angehört. Daraufhin bereitet die Vermittlungseinrichtung VE eine Telefonverbindung V2 als zweite Kommunikationsbeziehung zwischen dem Teilnehmer TN1 und einem der Teilnehmerklasse "Pizzaservice" zugeordneten Vermarkter, hier MK, vor. Der Vermarkter MK kann z.B. eine Werbeagentur, ein Anbieter von Waren oder Dienstleistungen oder ein anderer Marketingtreibender sein. Im vorliegenden Ausführungsbeispiel sei angenommen, dass der der Teilnehmerklasse "Pizzaservice" zugeordnete Vermarkter MK ein Weinhändler ist. Eine solche Zuordnung erscheint insofern vorteilhaft, als bei Bestellung einer Pizza häufig auch ein Bedürfnis nach einer Weinbestellung besteht. Die Telefonverbindung V2 wird durch die Vermittlungseinrichtung VE unmittelbar nach Beenden der Verbindung V1 initiiert. Alternativ oder zusätzlich zu den Telefonverbindungen V1 und V2 kann die erste und/oder die zweite Kommunikationsbeziehung z.B. durch Email-Übertragungen, SMS-Übertragungen, Fax-Übertragungen oder Instant Messaging-Übertragungen hergestellt werden.

Figur 2 zeigt die Datenbank DB der Vermittlungseinrichtung VE in gegenüber Figur 1 detaillierter Darstellung. Die Datenbank DB umfasst ein elektronisches Telefonbuch TB, eine Zuordnungstabelle ZT und eine als so genannte Robinson-Liste fungierende Adressenliste RL. Die Adressenliste RL enthält im vorliegenden Ausführungsbeispiel Rufnummern von Teilnehmern, die keine Vermarktungsaktion oder keine Kommunikationsbeziehung mit einem Vermarkter wünschen.

Im elektronischen Telefonbuch TB sind Rufnummern RN2,RN3,... von Teilnehmern TN2,MK,... des Kommunikationssystems KS Teilnehmernamen oder -benennungen zugeordnet. Für das folgende Ausführungsbeispiel sei angenommen, dass der Rufnummer RN2 die Teilnehmerbenennung "PIZZA-Service" und der Rufnummer RN3 die Teilnehmerbenennung "Weinhändler" im elektronischen Telefonbuch TB zugeordnet sind.

In der Zuordnungstabelle ZT sind verschiedenen Teilnehmerklassen PIZZA, WEIN, ... Vermarkter über deren Rufnummer, hier RN3, RN4, ..., sowie Vermarktungsaktionen MA1, MA2, ... zugeordnet. Im vorliegenden Ausführungsbeispiel ist der Teilnehmerklasse PIZZA über die Rufnummer RN3 der Vermarkter MK sowie die Vermarktungsaktion MA1 zugeordnet. Entsprechend ist der Teilnehmerklasse WEIN ein weiterer Vermarkter (nicht dargestellt) über dessen Rufnummer RN4 sowie eine weitere Vermarktungsaktion MA2 zugeordnet. Die in der Zuordnungstabelle ZT vorgesehenen Teilnehmerklassen PIZZA, WEIN, ... sind vorzugsweise analog zu einer vorgebbaren Klassifikation von potentiellen Kundenbedürfnissen gebildet. Dementsprechend sollten durch die Teilnehmerklasse PIZZA diejenigen Zielteilnehmer erfasst werden, bei denen eine Pizza bestellt werden kann und durch die Teilnehmerklasse WEIN, diejenigen Zielteilnehmer, bei denen Wein zu bestellen ist. Im vorliegenden Ausführungsbeispiel werden diejenigen Zielteilnehmer, hier RN2, deren Teilnehmerbenennung im Telefonbuch TB den Wortbestandteil "Pizza" aufweisen der Teilnehmerklasse PIZZA und diejenigen Teilnehmer, hier MK, deren Teilnehmerbenennung im Telefonbuch TB den Wortbestandteil "Wein" aufweist, der Teilnehmerklasse WEIN zugeordnet. Neben den beispielhaft angegebenen Teilnehmerklassen PIZZA und WEIN sind selbstverständlich noch eine Vielzahl weiterer Teilnehmerklassen durch vorgebbare Wort- oder Satzbestandteile im Telefonbucheintrag oder in den Einträgen anderer Datenbanken identifizierbar.

Vorteilhafterweise wird einer jeweiligen Teilnehmerklasse ein Vermarkter zugeordnet, dessen Angebot ein jeweiliges Angebot dieser Teilnehmerklasse möglichst vorteilhaft ergänzt. So ist im vorliegenden Ausführungsbeispiel der Teilnehmerklasse PIZZA über die Rufnummer RN3 der Weinhändler MK als Vermarkter zugeordnet, da häufig zu erwarten ist, dass ein Pizza bestellender Kunde, hier TN1, auch an Wein interessiert ist.

Als Vermarktungsaktionen MA1, MA2, ... können unterschiedliche, vorzugsweise vermarkterspezifische Aktionen vorgesehen sein, wie z.B. ein sofortiger Rückruf durch den jeweiligen Vermarkter, ein Rückfax oder eine Email.

Im vorliegenden Ausführungsbeispiel wird im Rahmen der Verbindung V1 vom Teilnehmer TN1 zum Zielteilnehmer TN2 die Adressenliste RL durch die Vermittlungseinrichtung VE nach der Rufnummer RN1 des rufenden Teilnehmers TN1 durchsucht. Falls die Rufnummer RN1 des Teilnehmers TN1 in der Adressenliste RL eingetragen ist, erfolgt keine Vermarktungsaktion und es wird keine zweite Kommunikationsbeziehung V2 zu einem Vermarkter aufgebaut.

Wird die Rufnummer RN1 des Teilnehmers TN1 nicht in der Adressenliste RL gefunden, so stellt die Vermittlungseinrichtung VE anhand der Zielrufnummer RN2 der Verbindung V1 fest, ob der durch die Zielrufnummer RN2 identifizierte Teilnehmer einer Teilnehmerklasse angehört und ermittelt gegebenenfalls diese Teilnehmerklasse. Im vorliegenden Ausführungsbeispiel wird zu diesem Zweck im Telefonbuch TB nach der Rufnummer RN2 gesucht und die der Rufnummer RN2 zugeordnete Teilnehmerbenennung, hier "PIZZA-Service", ermittelt. Die ermittelte Teilnehmerbenennung "PIZZA-Service" wird anschließend mit in der Zuordnungstabelle ZT enthaltenen Benennungen von Teilnehmerklassen PIZZA, WEIN, ... verglichen. Aufgrund der Übereinstimmung des Bezeichnungsbestandteils "PIZZA", wird der Zielteilnehmer TN2 als der Teilnehmerklasse PIZZA zugeordnet erkannt. Daraufhin wird die der erkannten Teilnehmerklasse PIZZA in der Zuordnungstabelle ZT zugeordnete Rufnummer RN3 des Vermarkters MK sowie die durchzuführende Vermarktungsaktion MA1 ermittelt. Für das vorliegende Ausführungsbeispiel sei angenommen, dass die ermittelte Vermarktungsaktion MA1 einen unmittelbaren Aufbau der Verbindung V2 zwischen dem rufenden Teilnehmer TN1 und dem Vermarkter MK nach Beendigung der Verbindung V1 initiiert. Auf diese Weise kann der Teilnehmer TN1 unmittelbar nach Beendigung seines Anrufs beim Pizzaservice TN2 gewissermaßen in Echtzeit mit dem Weinhändler MK verbunden werden, der den Teilnehmer TN1 ein Weinangebot unterbreiten kann.

Nach einer vorteilhaften Ausführungsvariante der Erfindung kann der Teilnehmer TN1 vor Durchführung der Vermarktungsaktion über mögliche Verfahrensoptionen befragt werden. Bei einer Telefonverbindung kann dies z.B. mittels eines so genannten Voice-Prompt, z.B. mit der Ansage "wenn Sie weitere Angebote einholen wollen, drücken Sie die 1 oder sagen Sie weiter", erfolgen. Bei einer emailgestützten Kommunikationsbeziehung kann dem Teilnehmer TN1 eine Email mit Auswahlknöpfen für verschiedene Verfahrenoptionen zugestellt werden.

Vorzugsweise kann die Vermittlungseinrichtung VE bereits während des Bestehens der Verbindung V1 zwischen den Teilnehmern TN1 und TN2 dem Teilnehmer TN1 mögliche Vermarktungsaktionen oder -optionen präsentieren. Bei einer Telefonanlage kann dies z.B. durch Textausgabe auf einem Telefondisplay des Teilnehmers TN1 erfolgen, wobei eine vom Teilnehmer TN1 gewünschte Vermarktungsaktion bzw. -option durch Drücken einer Telefontaste auswählbar sein kann.

Für einen jeweiligen Vermarkter, hier MK, können verschiedene Kommunikationsoptionen vorgesehen sein. So kann bei einer Telefonanlage vorgesehen sein, dass unmittelbar nach Beenden der Verbindung V1 durch Auflegen des Teilnehmers TN1 die Verbindung V2 initiiert wird, so dass sowohl beim Teilnehmer TN1 als auch beim Vermarkter MK ein Anruf durch Läuten signalisiert wird. Nach Annahme der Verbindung V2 durch den Teilnehmer TN1 und ggf. nach Durchlaufen der oben angegebenen Auswahloptionen für den Teilnehmer TN1 wird die Verbindung V2 durchgeschaltet.

Alternativ dazu kann vorgesehen sein, dass die erste Kommunikationsbeziehung V1 dem Vermarkter MK mitgeteilt wird, um diesem eine Auswahl der durchzuführenden Vermarktungsaktion zu überlassen.

Weiterhin kann für den Vermarkter VM eine Wahlmöglichkeit vorgesehen werden, die es ihm erlaubt, ein jeweiliges Antwortmedium ggf. in Abhängigkeit von dem für die erste Kommunikationsbeziehung V1 gewählten Kommunikationsmedium zu wählen, z.B. eine Email bei einem Telefonanruf des Teilnehmers TN1 oder einen Telefonanruf bei einem Fax des Teilnehmers TN1.

## Patentansprüche

1. Verfahren für ein Kommunikationssystem (KS), wobei
a. in einer Datenbank (DB) des Kommunikationssystems (KS) über das Kommunikationssystem (KS) erreichbare Zielteilnehmer (TN2, MK) unterschiedlichen, jeweils einem Angebot zugeordneten Teilnehmerklassen (PIZZA, WEIN) zugeordnet werden, denen jeweils ein Vermarkter (MK) mit einem ergänzenden Angebot zugeordnet wird,
b. das Kommunikationssystem (KS) anhand einer von einem ersten Teilnehmer (TN1) angegebenen Zieladresse (RN2) eine erste Kommunikationsbeziehung (V1) zwischen dem ersten Teilnehmer (TN1) und einem durch die Zieladresse (RN2) identifizierten Zielteilnehmer (TN2) aufbaut,
c. anhand der Zieladresse (RN2) durch Abfrage der Datenbank (DB) eine Teilnehmerklasse (PIZZA) ermittelt wird, der der durch die Zieladresse (RN2) identifizierte Zielteilnehmer (TN2) angehört, und
d. infolge der Ermittlung der Teilnehmerklasse (PIZZA) eine zweite Kommunikationsbeziehung (V2) zwischen dem ersten Teilnehmer (TN1) und einem der ermittelten Teilnehmerklasse (PIZZA) zugeordneten Vermarkter (MK) durch das Kommunikationssystem (KS) aufgebaut wird.

2. Verfahren nach Anspruch 1,
**dadurch gekennzeichnet,**
**dass** den Teilnehmerklassen (PIZZA, WEIN) und/oder einem jeweiligen Vermarkter (MK) in der Datenbank (DB) jeweils mindestens eine Vermarktungsaktion (MA) zugeordnet wird, und
**dass** eine der ermittelten Teilnehmerklasse (PIZZA) und/oder dem zugeordneten Vermarkter (MK) zugeordnete Vermarktungsaktion (MA) im Rahmen der zweiten Kommunikationsbeziehung (V2) durch das Kommunikationssystem (KS) initiiert wird.

3. Verfahren nach einem der vorhergehenden Ansprüche,
**dadurch gekennzeichnet,**
**dass** der Aufbau der zweiten Kommunikationsbeziehung (V2) durch ein Beenden der ersten Kommunikationsbeziehung (V1) veranlasst wird.

4. Verfahren nach einem der vorhergehenden Ansprüche,
**dadurch gekennzeichnet,**
**dass** unmittelbar nach Beenden der ersten Kommunikationsbeziehung (V1) als zweite Kommunikationsbeziehung (V2) eine Verbindung zwischen dem ersten Teilnehmer (TN1) und dem der ermittelten Teilnehmerklasse (PIZZA) zugeordneten Vermarkter (MK) initiiert wird.

5. Verfahren nach einem der vorhergehenden Ansprüche,
**dadurch gekennzeichnet,**
**dass** durch das Kommunikationssystem (KS) eine den ersten Teilnehmer (TN1) identifizierende Adressinformation (RN1) erfasst wird,
die erfasste Adressinformation (RN1) mit Adresseinträgen in einer Adressenliste (RL) der Datenbank (DB) verglichen wird, und
bei positivem Vergleichsergebnis keine zweite Kommunikationsbeziehung (V2) initiiert wird.

6. Verfahren nach einem der vorhergehenden Ansprüche,
**dadurch gekennzeichnet,**
**dass** durch das Kommunikationssystem (KS) eine die zweite Kommunikationsbeziehung (V2) betreffende Anfrageinformation an den ersten Teilnehmer (TN1) übermittelt wird, und der Aufbau der zweiten Kommunikationsbeziehung (V2) abhängig von einer vom ersten Teilnehmer (TN1) eingegeben Antwortinformation erfolgt.

7. Verfahren nach Anspruch 6,
**dadurch gekennzeichnet,**
**dass** die Anfrageinformation bereits während des Bestehens der ersten Kommunikationsbeziehung (V1) zum ersten Teilnehmer (TN1) übermittelt und dort angezeigt wird.

8. Verfahren nach einem der vorhergehenden Ansprüche,
**dadurch gekennzeichnet,**
**dass** durch das Kommunikationssystem (KS) eine die erste Kommunikationsbeziehung (V1) betreffende Anfrageinformation an den der ermittelten Teilnehmerklasse (PIZZA) zugeordneten Vermarkter (MK) übermittelt wird, und der Aufbau der zweiten Kommunikationsbeziehung (V2) abhängig von einer von dem Vermarkter (MK) eingegeben Antwortinformation erfolgt.

9. Kommunikationssystem zur Durchführung des Verfahrens nach einem der vorhergehenden Ansprüche.

## Claims

1. Method for a communication system (KS), wherein
a. target subscribers (TN2, MK), reachable by means of the communication system (KS), are associated in a data base (DB) of the communication system (KS) with different target subscriber classes (PIZZA, WEIN), each of which is associated with an offer, associated with which target subscriber classes in each case is a marketer (MK) with a supplementary offer,
b. by way of a destination address (RN2) specified by a first subscriber (TN1), the communication system (KS) sets up a first communication relationship (V1) between the first subscriber (TN1) and a subscriber (TN2) identified by the destination address (RN2),
c. a subscriber class (PIZZA) is determined by way of the destination address (RN2) and by interrogating the data base (DB), said subscriber class belonging to the target subscriber (TN2) identified by the destination address (RN2), and
d. as a result of determining the subscriber class (PIZZA), a second communication relationship (V2) is set up by the communication system (KS) between the first subscriber (TN1) and a marketer (MK) associated with the determined subscriber class (PIZZA).

2. Method according to Claim 1, **characterized in that** at least one marketing action (MA) is associated in each case with the subscriber classes (PIZZA, WEIN) and/or with a respective marketer (MK) in the data base (DB) and **in that** a marketing action (MA) associated with the determined subscriber class (PIZZA) and/or with the associated marketer (MK) is initiated by the communication system (KS) within the framework of the second communication relationship (V2).

3. Method according to one of the preceding claims, **characterized in that** the setting up of the second communication relationship (V2) is brought about by a terminating of the first communication relationship (V1).

4. Method according to one of the preceding claims, **characterized in that** directly after the terminating of the first communication relationship (VI), a connection between the first subscriber (TN1) and the marketer (MK) associated with the determined subscriber class (PIZZA) is initiated as second communication relationship (V2).

5. Method according to one of the preceding claims, **characterized in that** address information (RN1) identifying the first subscriber (TN1) is detected by the communication system (KS), the detected address information (RN1) is compared with address entries in an address list (RL) in the data base (DB), and where the result of the comparison is positive the second communication relationship (V2) is not initiated.

6. Method according to one of the preceding claims, **characterized in that** enquiry information relating to the second communication relationship (V2) is transmitted by the communication system (KS) to the first subscriber (TN1), and the setting up of the second communication relationship (V2) is effected as a function of response information input by the first subscriber (TN1).

7. Method according to Claim 6, **characterized in that** the enquiry information is transmitted whilst the first communication relationship (VI) with the first subscriber (TN1) still exists and is displayed to said first subscriber.

8. Method according to one of the preceding claims, **characterized in that** enquiry information relating to the first communication relationship (VI) is transmitted by the communication system (KS) to the marketer (MK) associated with the determined subscriber class (PIZZA), and the setting up of the second communication relationship (V2) is effected as a function of response information input by the marketer (MK).

9. Communication system for accomplishing the method according to one of the preceding claims.

## Revendications

1. Procédé pour un système de communication (KS), dans lequel
a. dans une banque de données (DB) du système de communication (KS), des abonnés-cibles (TN2, MK) pouvant être joints par le biais du système de communication (KS) se voient associer différentes classes d'abonné (PIZZA, WEIN), associées chacune à une offre, auxquelles est associé à chaque fois un mercaticien (MK) avec une offre complémentaire,
b. le système de communication (KS) établit à l'aide d'une adresse de destination (RN2) indiquée par un premier abonné (TN1) une première relation de communication (V1) entre le premier abonné (TN1) et un abonné-cible (TN2) identifié par l'adresse de destination (RN2),
c. à l'aide de l'adresse de destination (RN2), il est déterminé en interrogeant la banque de données (DB) une classe d'abonné (PIZZA) à laquelle appartient l'abonné-cible (TN2) identifié par l'adresse de destination (RN2), et
d. suite à la détermination de la classe d'abonné (PIZZA), le système de communication (KS) établit une deuxième relation de communication (V2) entre le premier abonné (TN1) et un mercaticien (MK) associé à la classe d'abonné déterminée (PIZZA).

2. Procédé selon la revendication 1,
**caractérisé en ce qu'**au moins une action de commercialisation (MA) est associée dans la banque de données (DB) à chaque fois aux classes d'abonné (PIZZA, WEIN) et/ou à un mercaticien respectif (MK),
et **en ce qu'**une action de commercialisation (MA) associée à la classe d'abonné déterminée (PIZZA) et/ou au mercaticien associé (MK) est initiée par le système de communication (KS) dans le cadre de la deuxième relation de commercialisation (V2).

3. Procédé selon l'une quelconque des revendications précédentes,
**caractérisé en ce que** l'établissement de la deuxième relation de communication (V2) est lancé en mettant fin à la première relation de communication (V1).

4. Procédé selon l'une quelconque des revendications précédentes,
**Caractérisé en ce que**, immédiatement après la fin de la première relation de communication (V1), une liaison est initiée en tant que deuxième relation de communication (V2) entre le premier abonné (TN1) et le mercaticien (MK) associé à la classe d'abonné déterminée (PIZZA).

5. Procédé selon l'une quelconque des revendications précédentes,
**Caractérisé en ce qu'**une information d'adresse (RN1) identifiant le premier abonné (TN1) est détectée par le biais du système de communication (KS),
**en ce que** l'information d'adresse détectée (RN1) est comparée à des enregistrements d'adresse présents dans une liste d'adresses (RL) de la banque de données (DB), et
**en ce qu'**une deuxième relation de communication (V2) n'est pas initiée si le résultat de la comparaison est positif.

6. Procédé selon l'une quelconque des revendications précédentes,
**caractérisé en ce qu'**une information d'interrogation concernant la deuxième relation de communication (V2) est transmise par le système de communication (KS) au premier abonné (TN1), et
**en ce que** l'établissement de la deuxième relation de communication (V2) est effectuée en fonction d'une information de réponse donnée par le premier abonné (TN1).

7. Procédé selon la revendication 6,
**caractérisé en ce que** l'information d'interrogation est déjà transmise au premier abonné (TN1) et affichée là pendant que la première relation de communication (V1) est présente.

8. Procédé selon l'une quelconque des revendications précédentes,
**caractérisé en ce que** le système de communication (KS) transmet au mercaticien (MK), associé à la classe d'abonné déterminée (PIZZA), une information d'interrogation concernant la première relation de communication (V1), et
**en ce que** l'établissement de la deuxième relation de communication (V2) est effectuée en fonction d'une information de réponse donnée par le mercaticien (MK).

9. Système de communication permettant la mise en oeuvre du procédé selon l'une quelconque des revendications précédentes.
